# EUROPEAN PATENT APPLICATION

(11) **EP 4 722 278 A1**
(43) Date of publication of application: **08.04.2026**
(21) Application number: 24814289.5
(22) Date of filing: 23.05.2024
(51) Int. Cl.: C08J 5/18, B32B 27/28, C08L 83/07, C08K 7/26

(54) **GRADIENT SILICONE THIN FILM AND PREPARATION METHOD THEREFOR**

(30) Priority: 30.05.2023 CN 202310624142
(71) Applicant: SSI New Material (Zhenjiang) Co., Ltd., Zhenjiang, Jiangsu 212006 (CN)
(72) Inventor: GUO, Mingbo, Zhenjiang, Jiangsu 212006 (CN); WANG, Chunjian, Zhenjiang, Jiangsu 212006 (CN); LIU, Ce, Zhenjiang, Jiangsu 212006 (CN); YU, Zhigang, Zhenjiang, Jiangsu 212006 (CN); ZHANG, Lei, Zhenjiang, Jiangsu 212006 (CN); MA, Yuanhong, Zhenjiang, Jiangsu 212006 (CN)
(74) Representative: Isern Patentes y Marcas S.L.
(86) International application number: PCT/CN2024/094874
(87) International publication number: WO 2024/245090

(57) **Abstract**

The present disclosure provides a gradient silicone membrane and a preparation method therefor. The preparation method includes: (1) preparing a component A and a component B, in which the component A includes an silicone matrix component, a filler, and a catalyst, and the component B includes an silicone matrix component, a filler, a crosslinking agent, and an inhibitor; and (2) preparing at least one thin layer A from component A and at least one thin layer B from component B, adhering the layers together in an alternating lamination sequence and performing curing to obtain the gradient silicone membrane; or spraying the component A and the component B alternately, and performing curing to form the gradient silicone membrane. The gradient silicone membrane prepared by this preparation method exhibits a characteristic of gradient change in mechanical performance in a thickness direction, which is of great value in improving damping of a material.

## Description

### TECHNICAL FIELD

The present disclosure relates to a field of membrane technology, and in particular relates to a gradient silicone membrane and a preparation method therefor.

### BACKGROUND

Membranes used in speakers typically require good damping characteristics. Generally, such membranes are divided into two broad categories: single-layer membranes and composite membranes. For single-layer membranes, it is often necessary to improve performance of various items at the same time to match requirements, and the performance of each part of a membrane material is uniform. For composite membranes, excellent performance is usually achieved by superimposing performance advantages. A composite membrane includes two parts: a support layer and a functional layer. The two parts can be laminated once or a plurality of times to form a multilayer composite structure to satisfy performance requirements of a speaker. Silicone rubber is used in diaphragms, generally in the form of a single-layer membrane, which demands high performance in multiple properties of the silicone rubber. However, damping of the silicone rubber is very low, which is a significant drawback for such applications.

Gradient materials can be formed in a variety of ways, such as deposition, diffusion, and lamination. Diffusion is a common method for forming two-dimensional gradient materials. Typically, one or more substances are infiltrated into a bulk material through methods such as immersion-swelling, coating, or steam permeation, so as to create a concentration gradient, and then the gradient material is formed by subsequent steps (such as cross-linking and polymerization). This method relies on controlling the infiltration time to achieve the desired concentration gradient, a process which is often time-consuming. The resulting material often exhibits a high concentration on the surface and a low concentration in the center, or a high concentration on one side and a low concentration on the other side.

In addition, gradient materials can be formed by applying electric or magnetic fields. By driving certain substances in a material to concentrate on one side under driving of an electric field or a magnetic field, a gradient material is formed with a high concentration on one side and a low concentration on the other side. In some cases, a gradient material may be formed with high concentrations on both sides (but the substances on both sides are different) and a low concentration in the center (there is very little of both substances in the center).

Another approach is to form gradient materials during a polymerization phase through chemical polymerization, such as graft polymerization and block polymerization. Alternatively, gradient polymers can be formed by interfacial polymerization at an interface between droplets and a solvent in emulsion or suspension polymerization or the like. These gradient polymers are often applied in two broad directions: a) direct use, and b) self-assembly. In the case of direct use, these materials are macroscopically homogeneous but exhibit a gradient change microscopically. Properties of the gradient materials are similar to those of homogeneous materials, but an advantage of a wider performance range is provided. In the case of self-assembly, multi-block polymers are often applied in this way, but there are difficulties in forming materials with a certain thickness (tens to hundreds of microns). These materials typically serve as templates and surface modifiers to enhance compatibility between different materials.

In addition, chemical polymerization, such as graft polymerization and block polymerization, often uses different monomers as raw materials to polymerize into polymers constituted by different materials, such as PMMA-g-PS (graft polymerization) and PMMA-b-PS (block polymerization). The same material may not form such polymers.

### SUMMARY

In order to solve the above problems, an objective of the present disclosure is to provide a gradient silicone membrane and a preparation method therefor. The gradient silicone membrane prepared by this preparation method exhibits a characteristic of gradient change of mechanical performance across a thickness direction, which is of great value in improving damping of a material.

In order to achieve the above object, the present disclosure provides a preparation method for a gradient silicone membrane, the preparation method including:
(1) preparing a component A and a component B, in which the component A includes an silicone matrix component, a filler, and a catalyst, and the component B contains an silicone matrix component, a filler, a crosslinking agent, and an inhibitor; and
(2) preparing at least one thin layer A from component A and at least one thin layer B from component B, adhering the layers together in an alternating lamination sequence using the component A and the component B respectively, adhering the thin layer A and the thin layer B to each other in an alternating sequence, and performing curing to obtain the gradient silicone membrane, , and embodiments of a specific adhering pattern include AB, ABAB ..., and BABAB ..., or spraying the component A and the component B alternately, and performing curing to form the gradient silicone membrane.

According to a specific embodiment of the present disclosure, viscosities of the component A and the component B are exemplarily in a range of 100 pa·s to 2000 pa·s, more exemplarily 300 pa·s to 1500 pa·s, and still more exemplarily 600 pa·s to 1200 pa·s. Viscosities that are too low may make it difficult to form a good gradient structure after the adhesion and curing. Viscosities that are too high require more precise membrane thickness control to achieve a gradient structure, which is relatively high in investment and slightly low in efficiency.

According to a specific embodiment of the present disclosure, exemplarily, calculated on the basis of 100 wt % of component A, the silicone matrix component constitutes 50wt% to 95 wt % of component A; and calculated on the basis of 100 wt % of component B, the silicone matrix component constitutes 50wt% to 95 wt % of component B.

According to a specific embodiment of the present disclosure, exemplarily, the mass fraction of the silicone matrix component in the component A is the same as the mass fraction of the silicone matrix component in the component B.

According to a specific embodiment of the present disclosure, exemplarily, the silicone matrix component in the component A is the same as the silicone matrix component in the component B.

According to a specific embodiment of the present disclosure, exemplarily, the silicone matrix components include an organic siloxane polymer with both terminal and side-chain double bonds.

According to a specific embodiment of the present disclosure, exemplarily, the organic siloxane polymer with both terminal and side-chain double bonds is selected from a group consisting of 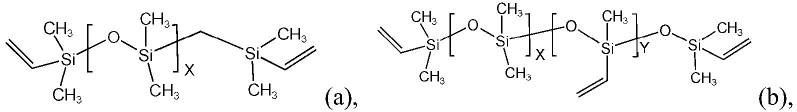 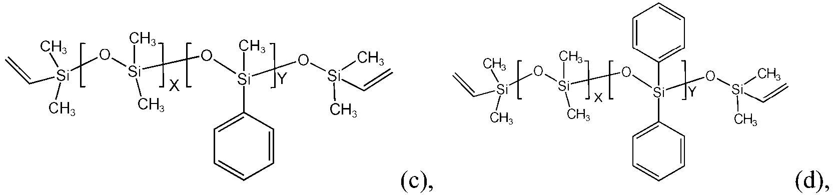 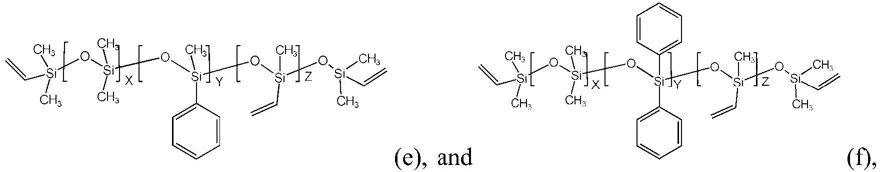 in which X, Y, and Z are in a range of 1 to 1000.

According to a specific embodiment of the present disclosure, a molecular weight of the organic siloxane polymer with both terminal and side-chain double bonds is exemplarily 5000 g/mol to 200000 g/mol, more exemplarily 10000 g/mol to 150000 g/mol, and still more exemplarily 15000 g/mol to 100000 g/mol.

According to a specific embodiment of the present disclosure, exemplarily, calculated on the basis of 100 wt % of component A, a mass fraction of the filler in the component A is 0 wt% to 50 wt%, and calculated on the basis of 100 wt % of component B, a mass fraction of the filler in the component B is 0 wt% to 50 wt%.

According to a specific embodiment of the present disclosure, exemplarily, the mass fraction of the filler in the component A is the same as the mass fraction of the filler in the component B.

According to a specific embodiment of the present disclosure, exemplarily, the filler in the component A is the same as the filler in the component B.

According to a specific embodiment of the present disclosure, exemplarily, the filler is selected from a group consisting of precipitated silica, fumed silica, carbon black, activated calcium carbonate, quartz powder, diatomaceous earth, titanium dioxide, and MQ silicone resin.

According to a specific embodiment of the present disclosure, exemplarily, a content of the catalyst in the component A calculated as Pt equivalent is 10 ppm to 1000 ppm.

According to a specific embodiment of the present disclosure, exemplarily, the catalyst includes a Pt complex.

According to a specific embodiment of the present disclosure, exemplarily, the catalyst is selected from a group consisting of a platinum-vinylsiloxane complex or improved versions thereof, an alcohol-modified chloroplatinic acid catalyst, a platinum-alkynyl complex, trimethyl(methylcyclopentadienyl)platinum ((Me-Cp)PtMe₃(IV)), platinum acetylacetonate (Pt(caca)₂(II)), cis-dichlorobis(triphenylphosphine)platinum (cis-Cl₂(Ph₃P)₂Pt(II)), dichlorobis(cyclopentadienyl)platinum (Cl₂Cp₂Pt(II)), and 1,5-cyclooctadiene dichloroplatinum (Cl₂(1,5-COD)Pt(II)).

According to a specific embodiment of the present disclosure, exemplarily, the platinum-vinylsiloxane complex or improved versions thereof include a complex of platinum and 1,3-divinyltetramethyldisiloxane (that is, a platinum-tetramethyldivinyldisiloxane complex) and/or a complex of platinum and 1,3,5,7-tetravinyl-1,3,5,7-tetramethylcyclotetrasiloxane.

According to a specific embodiment of the present disclosure, exemplarily, the alcohol-modified chloroplatinic acid catalyst includes an octanol-modified chloroplatinic acid catalyst and/or an ethanol-modified chloroplatinic acid catalyst.

According to a specific embodiment of the present disclosure, exemplarily, the platinum-alkynyl complex includes a bis(alkynyl)bis(triphenylphosphine)platinum complex and/or a bis(alkynyl)(cyclodienyl)platinum complex.

According to a specific embodiment of the present disclosure, exemplarily, a mass fraction of the crosslinking agent in the component B is 0.5 wt% to 10 wt%.

According to a specific embodiment of the present disclosure, exemplarily, the crosslinking agent includes hydrogen-containing silicone oil.

According to a specific embodiment of the present disclosure, exemplarily, the crosslinking agent is selected from 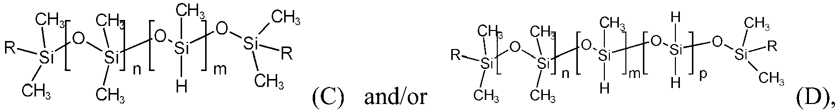 in which m, n, and p are in a range of 0 to 100, and a value of m + n + p is 1 to 300, exemplarily 3 to 200, and more exemplarily 5 to 150, and R is -CH₃ or H.

According to a specific embodiment of the present disclosure, exemplarily, a mass fraction of the inhibitor in the component B is 0.01 wt% to 1 wt%.

According to a specific embodiment of the present disclosure, exemplarily, the inhibitor is selected from a group consisting of alkynol compounds, polyvinyl polysiloxane, amide compounds, and maleate compounds.

When preparing the component A and the component B, other components may be added according to actual requirements. According to a specific embodiment of the present disclosure, exemplarily, a dye is added according to a color requirement, a photosensitizer is added according to a catalyst requirement, a silane coupling agent and a thickener are added according to a bonding requirement, and tetramethyltetravinylcyclotetrasiloxane (V4), a linear organosiloxane, a six-membered ring compound with a carbon-nitrogen unsaturated bond, and the like are added according to performance requirements, in which a terminal group of the linear organosiloxane includes a hydroxyl group, a degree of polymerization thereof is low, and the number of repeating units thereof is equal to or less than 50.

According to a specific embodiment of the present disclosure, exemplarily, in terms of the weight of the component A or the component B being 100%, an addition amount of the other ingredient is equal to or less than 1 wt%.

According to a specific embodiment of the present disclosure, exemplarily, in the step (2), the curing is performed by thermal curing, light curing, or photo-thermal hybrid curing according to the type of the catalyst.

According to a specific embodiment of the present disclosure, exemplarily, a temperature of the thermal curing is 120°C to 150°C.

According to a specific embodiment of the present disclosure, exemplarily, a time of the curing is 30 s to 600 s.

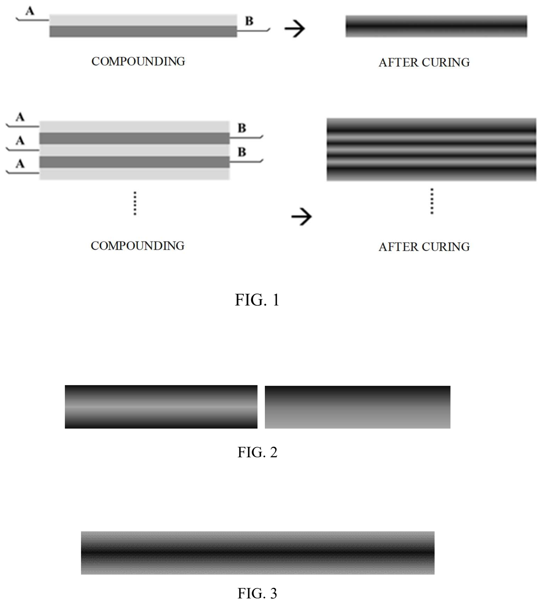

According to a specific embodiment of the present disclosure, the adhesion of the thin layer A and the thin layer B (or the component A and the component B) can be performed for one single time or a plurality of times, and there is no particular limitation on whether the outermost layer is the thin layer A or the thin layer B. As illustrated in FIG. 1, a depth of color after curing indicates a degree of curing.

The present disclosure also provides a gradient silicone membrane prepared by the above preparation method.

According to a specific embodiment of the present disclosure, a thickness of a single thin layer A or a single thin layer B in the gradient silicone membrane is exemplarily 1 µm to 1000 µm, more exemplarily 5 µm to 500 µm, and still more exemplarily 10 µm to 100 µm.

According to a specific embodiment of the present disclosure, exemplarily, the thicknesses of the single thin layer A and the single thin layer B are similar, and more exemplarily, a thickness difference therebetween is equal to or less than 5 µm.

The present disclosure also provides an application of the gradient silicone membrane in a speaker.

The present disclosure adopts silicone rubber having two components to form a material with a gradient change along a thickness direction by thin layer lamination. The component A and the component B are made into thin layers with a thickness of 1 µm to 1000 µm respectively, and compounded and cured as needed. Since the catalyst and the solidifying agent of the silicone rubber having two components are in systems of the component A and the component B respectively, the curing is well achieved after contact. Therefore, the degree of curing is relatively high and mechanical performance is relatively strong at a contact interface. The degree of curing is relatively low and the mechanical performance is relatively weak at portions away from the contact position, thereby forming a characteristic of a gradient change in the mechanical performance along the thickness direction, which is of a great value in improving the damping of the material. The preparation method of the present disclosure achieves internal fine structure adjustment through a chemical reaction of the material itself without changing the composition of the material, and the characteristic of the gradient change formed in the thickness direction is close to performance of homogeneous silicone in tensile deformation, but in deformations involving slip in the thickness direction such as shear or bending, the present disclosure shows obvious damping excellence, which has great advantages for low-damping materials such as silicone.

The present disclosure has the following beneficial effects.
(1) In the present disclosure, the components A and B are adhered to each other in the form of membrane materials, and are directly cured after being exhausted by a press roll (or by other adhesion methods). There is no need for waiting time, no need for additional means to control input, and continuous production is possible. As compared with traditional diffusion method and electromagnetic field method, the method of the present disclosure has high efficiency and low investment.
(2) In the present disclosure, the polymers formed are the same, which is essentially different from a method of using grafting, blocking, modification or other ways to introduce different groups to achieve performance improvement. There may be no problems such as phase separation and poor homogeneity caused by the introduction of heterogeneous elements. It is also applicable to cases where homogenous materials are required, such as a case where high transmittance is required.
(3) In the present disclosure, the gradient material exhibits a macroscopic gradient, and the gradient changes from the center toward the two sides, which is significantly different from the gradient material formed by the conventional diffusion method. The gradient material obtained by the conventional concentration gradient method as illustrated in FIG. 2 has a high surface concentration and a low concentration in the center, or a high concentration on one side and a low concentration on the other side.
(4) In the present disclosure, the improvement in damping performance is not an expansion of a damping range (including frequency range and/or temperature range), but improvement in a damping value, which is significantly different from the macroscopic homogeneity and microscopic gradient structure of microphase separation.

### BRIEF DESCRIPTION OF THE DRAWINGS

FIG. 1 is a schematic diagram illustrating adhesion and curing of a gradient silicone membrane of the present disclosure;
FIG. 2 is a schematic diagram illustrating a gradient material prepared by a conventional concentration gradient method;
FIG. 3 is a schematic diagram illustrating a gradient change in a crosslinking degree of a cured silicone membrane in a thickness direction;
FIG. 4 is a schematic diagram illustrating a bending mode, a tensile mode and a shearing mode of the membrane;
FIG. 5 shows results of a shear test; and
FIG. 6 shows results of a tensile test.

### DESCRIPTION OF THE EMBODIMENTS

In order to more clearly understand technical features, objects, and beneficial effects of the present disclosure, technical solutions of the present disclosure are now described in detail below, but these technical solutions cannot be understood as a limitation on the scope of implementation of the present disclosure.

### Embodiment 1

The present embodiment provides a gradient silicone membrane, which is prepared by the following steps.

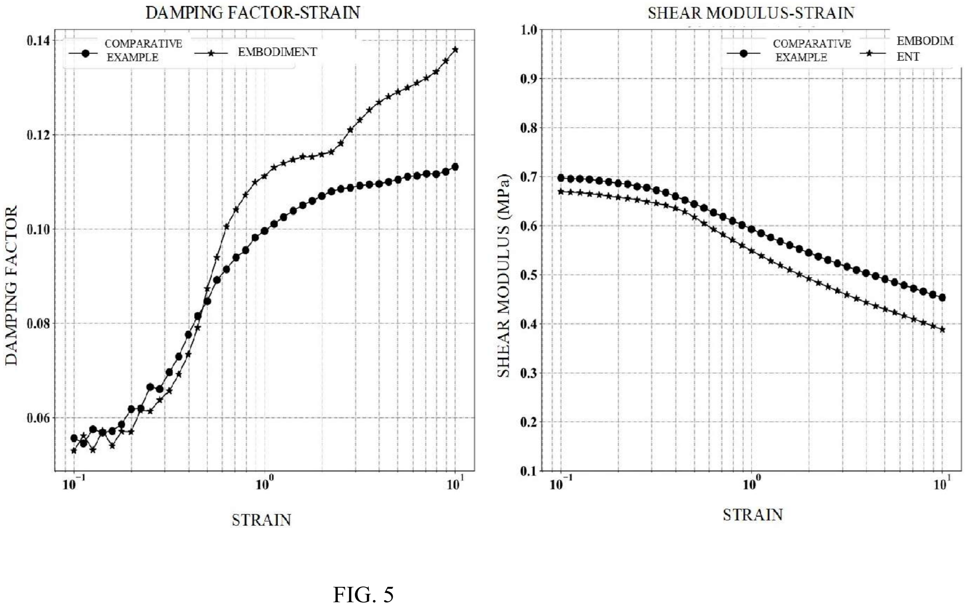

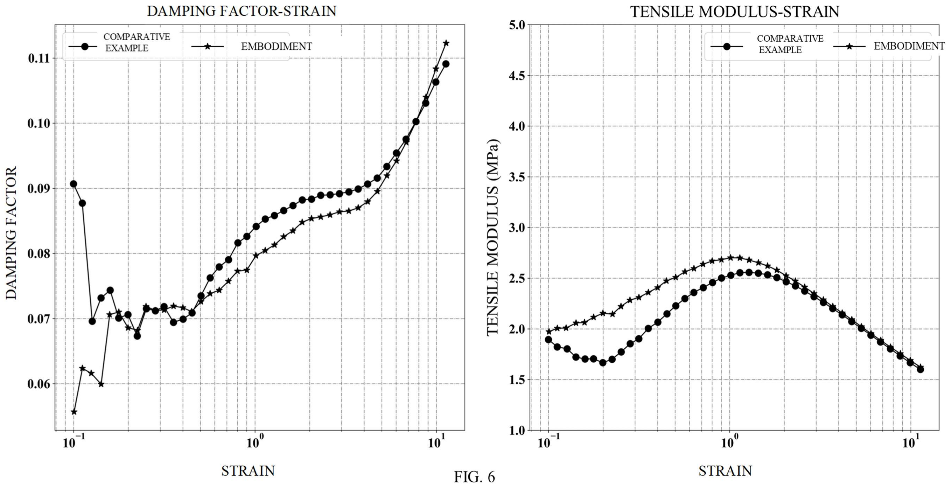

A component A and a component B were each made into adhesive layers with a thickness of 75 µm, followed by adhesion, and curing at 120°C for 10 minutes to obtain a single-layer gradient silicone membrane with a thickness of 150 µm. Test results thereof are shown in FIGS. 5 and 6.

Composition of the component A: 75 wt% of a mixture of silicone matrix components (a) and (b) in a mass ratio of 9:1 (in which the silicone matrix component (a) has a molecular weight of approximately 30000 g/mol and a vinyl content of 0.07 mol/kg, and the silicone matrix component (b) has a molecular weight of approximately 10000 g/mol and a vinyl content of 0.89 mol/kg), 25 wt% of a fumed silica filler, and 100 ppm of platinum-tetramethyldivinyldisiloxane complex.

Composition of the component B: 73.9 wt% of a mixture of the silicone matrix components (a) and (b) (same as those in the component A), 25 wt% of a fumed silica filler, 1 wt% of a crosslinking agent (C) (where R = H, m = 1, and n ≈ 31), and 0.1 wt% of an alkynol inhibitor, a structure of which is:

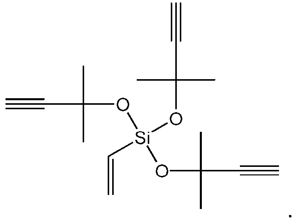

### Embodiment 2

The present embodiment provides a gradient silicone membrane, which is prepared by the following steps.

A component A was made into three adhesive layers A1, A2, and A3 with thicknesses of 20 µm, 25 µm, and 30 µm, and a component B was made into three adhesive layers B1, B2, and B3 with thicknesses of 20 µm, 25 µm, and 30 µm, respectively. The adhesive layers were adhered in a sequence of A1, B1, A2, B2, A3, and B3, followed by curing at 150°C for 1 min to obtain a gradient silicone membrane with a final thickness of 150 µm.

Composition of the component A: 80 wt% of a mixture of silicone matrix components (a), (b), and (e) in a mass ratio of 9:0.5:0.5 (the silicone matrix components (a) and (b) are the same as those in Embodiment 1, the silicone matrix component (e) has a molecular weight of approximately 3000 g/mol, a vinyl content of approximately 0.18 mol/kg, and a phenyl content of approximately 13 wt%), 20 wt% of a fumed silica filler, 100 ppm of a platinum-tetramethyldivinyldisiloxane complex, and additional 1 wt% of tetramethyltetravinylcyclotetrasiloxane additive in terms of a total weight of the mixture.

Composition of the component B: 78.9 wt% of a mixture of the silicone matrix components (a), (b), and (e) (same as those in the component A), 20 wt% of a fumed silica filler, 1 wt% of a crosslinking agent (D) (where R = 1, m ≈ 1, n ≈ 31, and p ≈ 1), and 0.1 wt% of an alkynol inhibitor (same as that in Embodiment 1).

In this silicone membrane, the introduction of tetramethyltetravinylcyclotetrasiloxane improves modulus and hardness thereof. The addition of the silicone matrix component (e) ensures that the damping would not decrease significantly due to the increase in modulus and hardness. A damping factor is 0.101 at 1% strain, and a damping factor is 0.130 at 10% strain.

### Embodiment 3

The present embodiment provides a gradient silicone membrane, which is prepared by the following steps.

A component A and a component B were applied on a surface of a TPEE film respectively to form two thin layers with a thickness of approximately 10 µm. The two layers were adhered together, followed by compression molding at 150°C to produce a speaker diaphragm (gradient silicone membrane), so as to form a three-layer structure of TPEE-silicone-TPEE.

Composition of the component A: 75 wt% of a mixture of silicone matrix components (a), (b), and (e) (same as in Embodiment 2), 20 wt% of a fumed silica filler, 5 wt% of MQ resin, 100 ppm of a platinum-tetramethyldivinyldisiloxane complex, and an additional 1 wt% of γ-methacryloxypropyltrimethoxysilane silane coupling agent based on a total weight of the mixture.

Composition of the component B: 74.9 wt% of a mixture of silicone matrix components (a), (b), and (e) (same as those in the component A), 20 wt% of a fumed silica filler, 4 wt% of MQ resin, 1 wt% of a crosslinking agent (D) (where R = 1, m ≈ 1, n ≈ 31, and p ≈ 1), and 0.1 wt% of an alkynol inhibitor (same as that in Embodiment 1).

In this embodiment, the silane coupling agent was introduced to improve the adhesion between the silicone membrane and TPEE. The introduction of the silicone matrix component (e) further improves the damping. The damping factor is 0.119 at 1% strain, and the damping factor is 0.332 at 10% strain.

### Embodiment 4

The present embodiment provides a gradient silicone membrane, which is prepared by the following steps.

A component A and a component B were sprayed on a surface of a PEEK film respectively to form two thin layers, each approximately 10 µm thick. The two layers were adhered together, followed by compression molding at 150°C to produce a speaker diaphragm (gradient silicone membrane), so as to form a three-layer structure of PEEK- silicone-PEEK.

Composition of the component A: 80 wt% of a mixture of silicone matrix components (a), (b), and (f) in a mass ratio of 9:0.5:0.5 (the silicone matrix components (a) and (b) are the same as those in Embodiment 1, the silicone matrix component (f) has a molecular weight of approximately 2000 g/mol, a vinyl content of approximately 0.2 mol/kg and a phenyl content of approximately 18 wt%), 20 wt% of a fumed silica filler, 100 ppm of a platinum-tetramethyldivinyldisiloxane complex, and an additional 1 wt% y-methacryloxypropyltrimethoxysilane silane coupling agent based on a total weight of the mixture.

Composition of the component B: 78.9 wt% of a mixture of the silicone matrix components (a), (b), and (f) (same as those in the component A), 20 wt% of a fumed silica filler, 1 wt% of a crosslinking agent (D) (where R = 1, m ≈ 1, n ≈ 31, and p ≈ 1), and 0.1 wt% of an alkynol inhibitor (same as that in Embodiment 1).

In this embodiment, the silane coupling agent was introduced to improve the adhesion between the silicone membrane and PEEK. The introduction of the silicone matrix component (f) further improves the damping. The damping factor is 0.102 at 1% strain , and the damping factor is 0.232 at 10% strain.

### Embodiment 5

This embodiment provides a spray-coated gradient silicone membrane, which is prepared by the following steps.

On a speaker diaphragm mold (or other mold surface that is needed for preparation), a spray molding method was adopted in which a component A and a component B were alternately sprayed. A thickness per spray pass was 5 µm to 20 µm, and a final thickness was 100 µm. After UV light curing, an silicone diaphragm (or another diaphragm) was formed.

Composition of the component A: 80 wt% of a mixture of silicone matrix components (a), (b), and (f) (the same as those in Embodiment 4), 20 wt% of a fumed silica filler, 400 ppm of trimethyl(methyl-cyclopentadienyl)platinum, and additional 1 wt% of a linear, hydroxyl-terminated organosiloxane additive (with double bonds in the side chain) based on a total weight of the mixture, a structure of which is as follows. 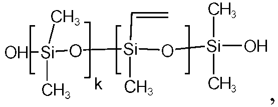 where k ≈ 15.

Composition of the component B: 78.9 wt% of a mixture of the silicone matrix components (a), (b), and (f) (same as those in the component A), 20 wt% of a fumed silica filler, 1 wt% of a crosslinking agent (D) (where R = 1, m ≈ 1, n ≈ 31, and p ≈ 1), and 0.1 wt% of N,N,N',N'-tetraallyl terephthalamide as an inhibitor.

In this embodiment, the linear organosiloxane was introduced as an additive to improve fatigue resistance of the silicone membrane, and the introduction of the silicone matrix component (f) further improves the damping, and photocatalytic organic platinum was used to directly form the silicone membrane under light curing.

The damping factor is 0.102 at 1% strain and 0.135 at 10% strain reaches of this diaphragm.

### Comparative Example 1

This comparative embodiment provides an silicone membrane, which is prepared by the following steps.

After fully mixing the component A and the component B, the mixture was pressed into a 150 µm thick adhesive layer, followed by curing at 120°C for 10 min, to prepare a homogeneous single-layer silicone membrane.

The component A and the component B are the same as in Embodiment 1. Test results thereof are shown in FIGS. 5 and 6.

### Comparative Example 2

This comparative embodiment attempted to prepare a gradient silicone membrane using a low viscosity composition.

Composition of the component A: 90 wt% of an silicone matrix component (a) (the silicone matrix component (a) has a molecular weight of approximately 10000 g/mol and a vinyl content of 0.54 mol/kg), 10 wt% of a fumed silica filler, and 100 ppm of a platinum-tetramethyldivinyldisiloxane complex.

Composition of the component B: 88.9 wt% of an silicone matrix component (a) (the same as that in the component A), 10 wt% of a fumed silica filler, 1 wt% of a crosslinking agent (C) (where R = H, m = 1, and n ≈ 31), and 0.1 wt% of an alkynol inhibitor (the same as that in Embodiment 1).

Viscosities of the component A and the component B were approximately 90 pa·s. During the film-formation process, significant flowing of the compositions occurred, which prevented proper lamination and the establishment of effective curing conditions, ultimately resulting in failed film formation..

### Comparative Example 3

This comparative embodiment attempted to prepare a gradient silicone membrane using a high viscosity composition.

Composition of the component A: 65 wt% of an silicone matrix component (a) (The silicone matrix component (a) is a mixture of a material with a low molecular weight and a material with a high molecular weight in a mass ratio of 9:1. The low molecular weight silicone matrix component (a) has a molecular weight of approximately 30000 g/mol and a vinyl content of 0.07 mol/kg; the high molecular weight silicone matrix component (a) has a molecular weight of approximately 600000 g/mol and a vinyl content of 0.009 mol/kg), 35 wt% of a fumed silica filler, and 100 ppm of a platinum-tetramethyldivinyldisiloxane complex.

Composition of the component B: 63.9 wt% of an silicone matrix component (a) (the same as that in the component A), 35 wt% of a fumed silica filler, 1 wt% of a crosslinking agent (C) (where R = H, m = 1, and n ≈ 31), and 0.1 wt% of an alkynol inhibitor (the same as that in Embodiment 1).

The component A and the component B both have a viscosity of approximately 2300 pa·s. When the two components were formed into 75 µm thick adhesive layers and adhered together and cured at 120°C for 10 minutes, surfaces of the two adhesive layers were not fully cured, resulting in a cohesive failure, and no silicone membrane was obtained.

### Performance Test

The double-layer compounding of the component A and the component B shows a gradient change in the crosslinking degree in the thickness direction of the cured silicone membrane, as illustrated in FIG. 3 (the depth of color indicates the degree of curing), and therefore, performance of the membrane is similar to that of a uniformly cross-linked material when subjected to a tensile force perpendicular to the thickness direction, and the membrane exhibits a significant damping effect under bending and shearing.

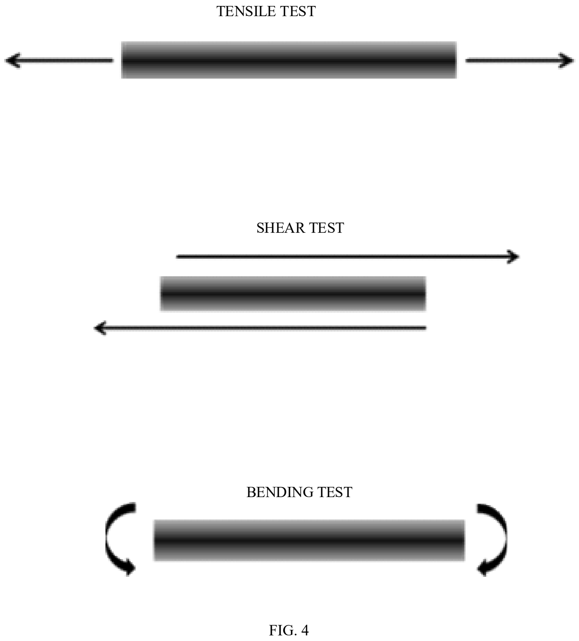

Since a bending mode of the membrane is difficult to measure, and the bending mode can be qualitatively regarded as a complex superimposing of tension and shear, as illustrated in FIG. 4. Therefore, performance under the tension mode and the shear mode was tested. Test results of Embodiment 1 and Comparative Embodiment 1 are shown in FIG. 5 and FIG. 6. The test method is as follows.
Test instrument: DMA Q850
Test method: strain sweep test, with 20 points per decade;
Strain range: 0.1% to 10%;
Test frequency: 1 Hz;
Test temperature: 25°C;
Test mode: tensile mode, sandwich shear mode.

As can be seen from the test results in FIGS. 5 and 6, in the tensile test, the performance of Embodiment 1 (gradient change) and Comparative Embodiment 1 (homogeneous) are basically the same. In the shear test, the modulus changes of Embodiment 1 and the comparative embodiment are basically the same, but the damping performance of Embodiment 1 is significantly better than that of the comparative embodiment.

## Claims

1. A preparation method for a gradient silicone membrane, the preparation method comprising:
(1) preparing a component A and a component B, the component A comprises a silicone matrix component, a filler, and a catalyst, and the component B comprises a silicone matrix component, a filler, a crosslinking agent, and an inhibitor; and
(2) preparing at least one thin layer A from component A and at least one thin layer B from component B, adhering the layers together in an alternating lamination sequence, and performing curing to obtain the gradient silicone membrane, or
spraying the component A and the component B alternately, and performing curing to form the gradient silicone membrane.

2. The preparation method according to claim 1, wherein
viscosities of the component A and the component B are in a range of 100 pa·s to 2000 pa·s.

3. The preparation method according to claim 2, wherein
viscosities of the component A and the component B are in a range of 300 pa·s to 1500 pa·s.

4. The preparation method according to claim 3, wherein
viscosities of the component A and the component B are in a range of 600 pa·s to 1200 pa·s.

5. The preparation method according to claim 1, wherein
calculated on the basis of 100 wt % of component A, the silicone matrix component constitutes 50wt% to 95 wt % of component A; and
calculated on the basis of 100 wt % of component B, the silicone matrix component constitutes 50wt% to 95 wt % of component B.

6. The preparation method according to claim 5, wherein
the mass fraction of the silicone matrix component in the component A is the same as the mass fraction of the silicone matrix component in the component B.

7. The preparation method according to claim 5, wherein
the silicone matrix component in the component A is the same as the silicone matrix component in the component B.

8. The preparation method according to claim 5, wherein
the silicone matrix component comprises an organic siloxane polymer with both terminal and side-chain double bonds.

9. The preparation method according to claim 8, wherein
the organic siloxane polymer with both terminal and side-chain double bonds is selected from a group consisting of 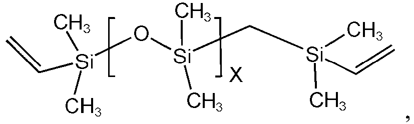 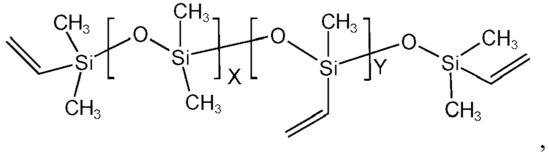 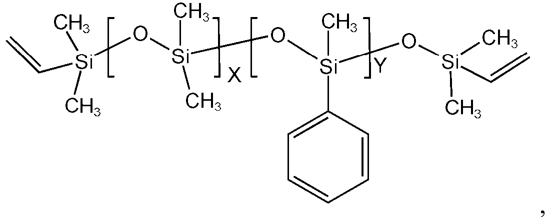 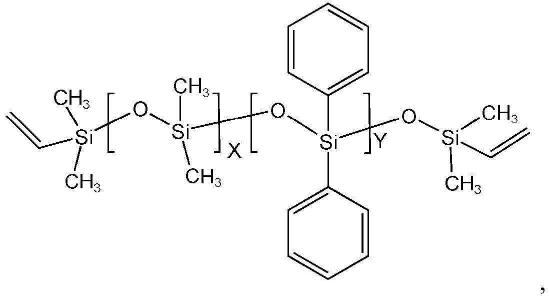 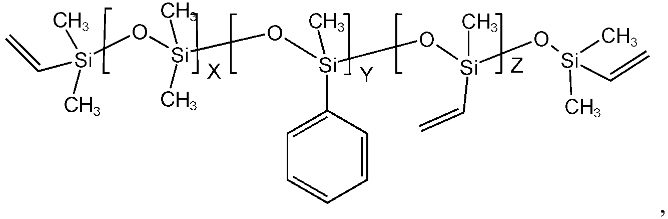
and 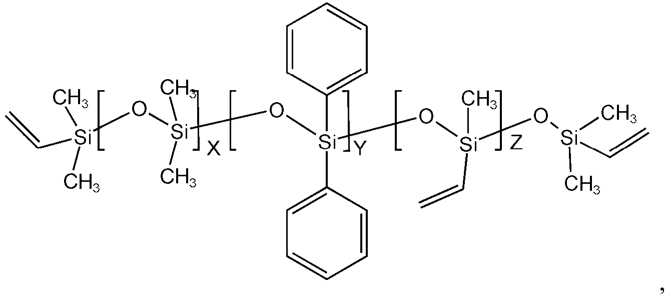 wherein
X, Y, and Z are in a range of 1 to 1000.

10. The preparation method according to claim 8, wherein
a molecular weight of the organic siloxane polymer with both terminal and side-chain double bonds is 5000 g/mol to 200000 g/mol.

11. The preparation method according to claim 10, wherein
the molecular weight of the organic siloxane polymer with both terminal and side-chain double bonds is 10000 g/mol to 150000 g/mol.

12. The preparation method according to claim 11, wherein
the molecular weight of the organic siloxane polymer with both terminal and side-chain double bonds is 15000 g/mol to 100000 g/mol.

13. The preparation method according to claim 1, wherein
calculated on the basis of 100 wt % of component A, a mass fraction of the filler in the component A is 0 wt% to 50 wt%, and
calculated on the basis of 100 wt % of component B, a mass fraction of the filler in the component B is 0 wt% to 50 wt%.

14. The preparation method according to claim 13, wherein
the mass fraction of the filler in the component A is the same as the mass fraction of the filler in the component B.

15. The preparation method according to claim 13, wherein
the filler in the component A is the same as the filler in the component B.

16. The preparation method according to claim 13, wherein
the filler is selected from a group consisting of precipitated silica, fumed silica, carbon black, activated calcium carbonate, quartz powder, diatomaceous earth, titanium dioxide, and MQ silicone resin.

17. The preparation method according to claim 1, wherein
a content of the catalyst in the component A calculated as Pt equivalent is 10 ppm to 1000 ppm.

18. The preparation method according to claim 1, wherein
the catalyst comprises a Pt complex.

19. The preparation method according to claim 18, wherein
the catalyst is selected from a group consisting of a platinum-vinylsiloxane complex or improved versions thereof, an alcohol-modified chloroplatinic acid catalyst, a platinum-alkynyl complex, trimethyl(methyl-cyclopentadienyl)platinum, platinum acetylacetonate,cis-dichlorobis(triphenylphosphine)platinum, dichlorobis(cyclopentadienyl)platinum, and 1,5-cyclooctadiene dichloroplatinum.

20. The preparation method according to claim 19, wherein
the platinum-vinylsiloxane complex or improved versions thereof comprises a complex of platinum and 1,3-divinyltetramethyldisiloxane and/or a complex of platinum and 1,3,5,7-tetravinyl-1,3,5,7-tetramethylcyclotetrasiloxane.

21. The preparation method according to claim 19, wherein
the alcohol-modified chloroplatinic acid catalyst comprises an octanol-modified chloroplatinic acid catalyst and/or an ethanol-modified chloroplatinic acid catalyst.

22. The preparation method according to claim 19, wherein
the platinum-alkynyl complex comprises a bis(alkynyl)bis(triphenylphosphine)platinum complex and/or a bis(alkynyl)(cyclodienyl)platinum complex.

23. The preparation method according to claim 1, wherein
a mass fraction of the crosslinking agent in the component B is 0.5 wt% to 10 wt%.

24. The preparation method according to claim 1, wherein
the crosslinking agent comprises a hydrogen-containing silicone oil.

25. The preparation method according to claim 1, wherein
the crosslinking agent is selected from 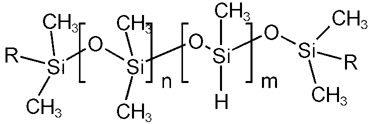 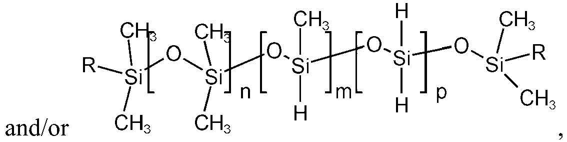 wherein
m, n, and p are in a range of 0 to 100, a value of m + n + p is 1 to 300, and R is -CH₃ or H.

26. The preparation method according to claim 25, wherein
the value of m + n + p is 3 to 200.

27. The preparation method according to claim 25, wherein
the value of m + n + p is 5 to 150.

28. The preparation method according to claim 1, wherein
a mass fraction of the inhibitor in the component B is 0.01 wt% to 1 wt%.

29. The preparation method according to claim 1, wherein
the inhibitor is selected from a group consisting of alkynol compounds, polyvinyl polysiloxane, amide compounds, and maleate compounds.

30. The preparation method according to claim 1, wherein
the component A and/or the component B further comprises other component, and the other component is selected from a group consisting of a dye, a photosensitizer, a silane coupling agent, a thickener, tetramethyltetravinylcyclotetrasiloxane, a linear organosiloxane, and a six-membered ring compound with a carbon-nitrogen unsaturated bond, wherein a terminal group of the linear organosiloxane comprises a hydroxyl group and the number of repeating units is equal to or less than 50.

31. The preparation method according to claim 30, wherein
an addition amount of the other component is equal to or less than 1 wt% in based on 100% by weight of the component A or the component B.

32. The preparation method according to claim 1, wherein
in the step (2), the curing is performed by thermal curing, light curing, or photo-thermal hybrid curing.

33. The preparation method according to claim 32, wherein
a temperature of the thermal curing is 120°C to 150°C.

34. The preparation method according to claim 32, wherein
a time of the curing is 30 s to 600 s.

35. A gradient silicone membrane prepared by the preparation method according to claim 1,

36. The gradient silicone membrane according to claim 35, wherein
a thickness of a single thin layer A or a single thin layer B in the gradient silicone membrane is 1 µm to 1000 µm.

37. The gradient silicone thin film according to claim 35, wherein
a thickness of a single thin layer A or a single thin layer B in the gradient silicone thin film is 5 µm to 500 µm.

38. The gradient silicone thin film according to claim 35, wherein
a thickness of a single thin layer A or a single thin layer B in the gradient silicone thin film is 10 µm to 100 µm.

39. The gradient silicone thin film according to claim 35, wherein
a thickness difference between a single thin layer A and a single thin layer B is equal to or less than 5 µm.

40. An application of the gradient silicone membrane according to claim 35 in a speaker.
